# EUROPEAN PATENT APPLICATION

(11) **EP 4 660 268 A1**
(43) Date of publication of application: **10.12.2025**
(21) Application number: 24180937.5
(22) Date of filing: 07.06.2024
(51) Int. Cl.: C09J 4/06, C08F 290/06, C08F 292/00, C08G 18/48, C08G 18/42, C08G 18/67

(54) **(METH)ACRYLATE COMPOSITION WITH IMPROVED LOW TEMPERATURE ELASTICITY AND ADHESION ON PVC SUBSTRATES**

(71) Applicant: Sika Technology AG, 6340 Baar (CH)
(72) Inventor: STORRER, Denise, 8048 Zürich (CH)
(74) Representative: Sika Patent Attorneys

(57) **Abstract**

The invention relates to a two-component (meth)acrylate adhesive composition, comprising in a first component at least one monomer, at least one elastomer with a backbone which is not a polyester, at least one elastomer with a polyester backbone, preferably additives selected from the group consisting of core-shell polymer, activator for free-radical curing, inhibitor for free-radical curing, filler and adhesion promoter and comprising in a second component at least one initiator for free-radical curing and preferably additives selected from the group consisting of plasticizer, filler, thixotropic agent and pigment.

The two-component composition can be formulated to show optimal elastic properties that are suitable for structural and semi-structural applications, especially as an adhesive to PVC, and which exhibit sufficiently elastic properties even at very low temperatures down to -20°C. These compositions are preferably formulated without the use of volatile and odor-intensive (meth)acrylate monomers such as MMA or reprotoxic monomers such as GLYFOMA.

## Description

### Technical Field

The invention relates to the field of two-component (meth)acrylate adhesives, sealants and coatings.

### Prior Art

(Meth)acrylate compositions have long been used in particular as adhesives or adhesive coatings since they have good mechanical and optical stability and especially allow very good adhesion to many substrates. However, elastic properties are also important for adhesive bonds, seals, and coatings, especially in applications that are subject to thermal or mechanical stress. Different approaches have been adopted to increase the flexibility and impact strength of (meth)acrylate compositions that otherwise are brittle and have very low breaking elongations, and thus to broaden their applicability to further fields.

Thus, for example, US 3,994,764 describes the addition of non-reactive elastomers, which are solid at room temperature, to the (meth)acrylate composition. The disadvantage of such compositions is that the (meth)acrylate monomers must be selected such that the solid elastomer dissolves in them. Only methyl methacrylate meets this requirement to a suitable extent, this in turn having the disadvantage that it exudes a very unpleasant odor during use and is highly flammable.

The addition of reactive elastomers, which are liquid at room temperature, to the (meth)acrylate composition to improve flexibility is described, for example, in US 4,769,419. Furthermore, US 4,439,600 for example describes the addition of polyurethane polymers functionalized with (meth)acrylates. Such compositions have the disadvantage that they exhibit viscoelastic behavior after curing and undergo plastic deformation under load.

WO 02/070619 describes elastic (meth)acrylate compositions comprising a monofunctional (meth)acrylate monomer having a high glass transition temperature (T_{g}), a monofunctional (meth)acrylate co-monomer and a liquid elastomer. However, it was surprisingly found that, possibly due to the strong plasticizing effect of a large part of the co-monomers contained therein, such compositions exhibit insufficient adhesive properties on certain substrates and have therefore proven unsuitable especially for the bonding of glass with polyvinyl chloride (PVC) and/or aluminum.

WO2008151849 describes elastic (meth)acrylate compositions comprising a first (meth)acrylate monomer selected from a specific list, preferably methyl methacrylate (MMA) and tetrahydrofurfuryl methacrylate (THFMA), and a second (meth)acrylate monomer, which is ethylhexyl acrylate (EHA) or maleic acid diallyl ester (MADAE), and additionally an elastomer. The compositions taught in this publication indeed have improved elastic properties and are particularly suitable for structural and semi-structural applications, for example for the bonding of glass with PVC and/or aluminum. However, these compositions in some cases still exhibit insufficient elasticity at low temperatures below zero Celsius, thus limiting their application.

EP 2 272 922 describes (meth)acrylate-based compositions as adhesives, sealants or coatings with improved adhesion to galvanized surfaces containing (meth)acrylate monomers and at least one metal compound selected from CaO, MgO and Ca(OH)₂. In addition to other suitable elastomers, polyurethane (meth)acrylates are also taught as optional components of the composition. US 2019/0233683 discloses pressure sensitive adhesives for adhesive tapes and films comprising a polymer with poly(meth)acrylate and polyurethane segments in defined ratios. This results in a pressure sensitive adhesive film that remains transparent and shows no cloudiness upon mechanical deformation.

WO2022263325 describes elastic (meth)acrylate compositions comprising two different monomers with different glass transitions temperatures (T_{g}) after polymerization, wherein the first monomer has a higher T_{g} and is selected from a specific list, preferably glycerol formal methacrylate (GLYFOMA), benzyl methacrylate (BNMA) , tetrahydrofurfuryl methacrylate (THFMA) or hydroxyethyl methacrylate (HEMA), and a second monomer with a lower T_{g}, which contains a longer hydrocarbon sidechain and is selected from lauryl tetradecyl methacrylate (LATEMA) or stearyl methacrylate (STEMA), and preferably additionally an elastomer. The compositions taught in this publication indeed have improved elastic properties even at very low temperatures down to -20°C, exhibit good adhesion to a large number of substrates, particularly to glass, PVC and aluminum, and are especially suited for structural and semi-structural applications. However, the best modes of the inventive compositions rely on monomers that are problematic in terms of environment, health and safety (EHS), especially concerning their reprotoxic labeling. Furthermore, the deviation in elasticity in terms of elongation at break from room temperature down to -20°C is still rather large, reportedly reaching 70% at best.

Some of the abovementioned publications describe (meth)acrylate compositions already having improved elasticity. However, the elastic behavior of (meth)acrylate compositions is very dependent on ambient temperature. At very low temperatures well below 0°C even the improved compositions of the prior art often show significant embrittlement. This is a problem for certain applications in exterior settings or in refrigerated interiors.

Another problem is that particularly suitable monomers for elastic properties such as methyl methacrylate (MMA) and glycerol formal methacrylate (GLYFOMA) are relatively volatile and have a strong odor or have problematic EHS properties respectively.

There is accordingly still a need for a (meth)acrylate composition which has a high elasticity at room temperature but at the same time is still sufficiently elastic even at very low temperatures down to -20°C, which is suitable for structural and semi-structural applications, for example for adhesion to glass, PVC and aluminum and which can preferably be formulated without volatile, strongly unpleasant smelling monomers such as MMA or reprotoxic monomers such as GLYFOMA.

### Summary of the Invention

It is accordingly an object of the present invention to provide two-component (meth)acrylate compositions which due to their optimal elastic properties are suitable for structural and semi-structural applications, especially as an adhesive to PVC, and which exhibit sufficiently elastic properties even at very low temperatures down to -20°C. These compositions are preferably formulated without the use of volatile and odor-intensive (meth)acrylate monomers such as MMA or reprotoxic monomers such as GLYFOMA.

It has now been found that, surprisingly, this object is achieved by compositions as claimed in claim 1.

These compositions have a very high elasticity at room temperature, thus allowing them to absorb deformations, such as those caused for example by the so-called bimetal effect when applied to substrates having different linear coefficients of thermal expansion. Such deformations also occur, for example, when glass is bonded with metals or plastics. The breaking elongations of the compositions according to the invention measured according to DIN EN 53504 are at least 100%, preferably at least 150%, in particular at least 200% or higher at room temperature (23°C). At the same time the compositions according to the invention have breaking elongations at a temperature of -20°C of at least 50%, preferably at least 60%, in particular at least 70% or higher. Likewise, and non-obviously to a person skilled in the art, compositions according to the invention exhibit very good adhesion to a large number of substrates, but in particular to PVC.

Further aspects of the invention are the subject of further independent claims. Particularly preferred embodiments of the invention are the subject of the dependent claims.

### Ways of executing the invention

The present invention relates to a two-component composition consisting of a first component C1 comprising
- at least one monomer M according to formula (I) 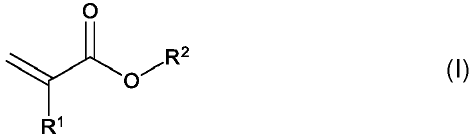 wherein
   R¹ represents a hydrogen radical or a methyl group, preferably a methyl group;
   R² represents a monovalent hydrocarbyl radical having 2 to 20 carbon atoms and which optionally contains one or more C-C multiple bonds, and/or cycloaliphatic moieties, and/or aromatic moieties.
- at least one elastomer **E1** according to formula (II) 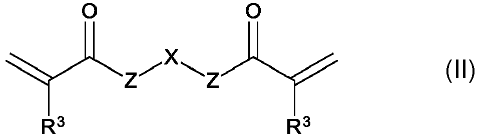 wherein
   X represents a polymeric diol after removal of two OH groups, wherein the polymeric diol is not a polyester diol;
   Z represents O or NR', wherein R' is a hydrocarbyl radical or a hydrogen radical, preferably a hydrogen radical;
   R³ represents either a hydrogen radical or a methyl group;
- at least one elastomer **E2** according to formula (III) 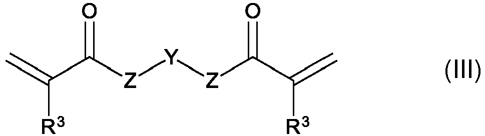 wherein
   Y represents a polymeric diol after removal of two OH groups, wherein the polymeric diol is a polyester diol;
   Z represents O or NR', wherein R' is a hydrocarbyl radical or a hydrogen radical, preferably a hydrogen radical;
   R³ represents either a hydrogen radical or a methyl group;
- preferably at least one additive selected from the group consisting of core-shell polymer, activator for free-radical curing, inhibitor for free-radical curing, filler and adhesion promoter;
and a second component **C2** comprising
- at least one initiator for free-radical curing
- preferably at least one additive selected from the group consisting of plasticizer, filler, thixotropic agent and pigment

In the present document substance names beginning with "poly", for example polyisocyanate, polyurethane, polyester or polyol, refer to substances formally containing two or more of the eponymous functional groups per molecule.

The term "polymer" in the present document encompasses firstly a collective of macromolecules that are chemically uniform, but differ in their degree of polymerization, molar mass, and chain length, said macromolecules having been prepared by a polyreaction (polymerization, polyaddition, polycondensation). The term also encompasses derivatives of such a collective of macromolecules from polyreactions, i.e. compounds, obtained by reactions, for example additions or substitutions, of functional groups in defined macromolecules and which may be chemically uniform or chemically nonuniform. The term moreover also encompasses so-called prepolymers, i.e. reactive oligomeric preliminary adducts, whose functional groups are involved in the formation of macromolecules.

The term "polymeric polyol" in the present document encompasses any polymer as defined above which comprises more than one hydroxyl group. Accordingly, the term "polymeric diol" encompasses any polymer having precisely two hydroxyl groups.

The term "polyurethane polymer" encompasses all polymers produced by the so-called diisocyanate polyaddition process. This also includes polymers that are virtually or completely free of urethane groups. Examples of polyurethane polymers are polyether polyurethanes, polyester polyurethanes, polyether polyureas, polyureas, polyester polyureas, polyisocyanurates, and polycarbodiimides.

"Molecular weight" in the present document is to be understood as meaning the defined and discrete molar mass (in grams per mole) of a molecule or part of a molecule, also referred to as a "radical".

"Average molecular weight" denotes the number average Mₙ of an oligomeric or polymeric mixture, especially a polydisperse mixture, of molecules or radicals, which is typically determined by gel-permeation chromatography (GPC) against a polystyrene standard.

The term "(meth)acrylate" is to be understood as meaning "methacrylate" or "acrylate".

A dashed line in the formulae in this document in each case represents the bond between a substituent and the accompanying molecular radical, unless otherwise stated.

"Room temperature" refers to a temperature of approximately 23°C.

Unless otherwise stated, all industry standards or other standards mentioned in the document relate to the version of the industry standard or other standard that was valid at the time of filing of the patent application.

The terms "mass" and "weight" are used synonymously in this document. Thus a "percentage by weight" (% by weight) is a percentage proportion by mass which, unless stated otherwise, refers to the mass (weight) of the overall composition or, depending on the context, of the entire molecule.

Term "bio-based" herein refers to substances, in particular chemicals, derived from biological, i.e. living or once-living sources, except fossil fuels. Thus, these sources are renewable and allow for a more sustainable production of other chemicals and materials respectively.

In particular, "bio-based" in the meaning used in the present disclosure refers to a material having a biocarbon content determined by using the standards ASTM D 6866 (ASTM D 6866-06) and ASTM D 7026 (ASTM D 7026-04) of at least 15 %, especially at least 25 %. The definition of bio-based further includes materials, in which the biocarbon content cannot be detected by the radiocarbon method due to time or dilution effects but is demonstrated and allocated by using relevant biomass balance (B:MB) methods.

The two-component composition according to the invention consists of a first component **C1** and a second component **C2.**

Component **C1** initially comprises at last one monomer **M** according to formula (I). 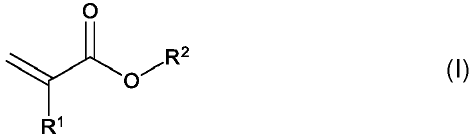 wherein
R¹ represents a hydrogen radical or a methyl group, preferably a methyl group;
R² represents a monovalent hydrocarbyl radical having 2 to 20 carbon atoms and which optionally contains one or more C-C multiple bonds, and/or cycloaliphatic moieties, and/or aromatic moieties.

In a preferred embodiment, R² in formula (I) represents either a linear or branched hydroxyalkyl group having 2 to 6 carbon atoms or a radical having 4 to 12 carbon atoms comprising a cycloaliphatic moiety, especially a five- and six-membered ring, preferably containing at least one heteroatom such as oxygen or a bicyclic moiety such as an isobornyl radical or an aromatic moiety such as a phenyl or benzyl radical.

In another preferred embodiment, R² in formula (I) is a linear or branched hydroxyalkyl group having 2 to 6 carbon atoms. Examples of such monomers are hydroxypropyl acrylate (HPA), hydroxypropyl methacrylate (HPMA), hydroxybutyl acrylate (HBA) or hydroxybutyl methacrylate (HBMA), preferably hydroxyethyl acrylate (HEA) or hydroxyethyl methacrylate (HEMA), wherein hydroxyethyl methacrylate (HEMA) is particularly preferred.

In another preferred embodiment, R² in formula (I) is a radical having 4 to 12 carbon atoms comprising a cycloaliphatic moiety such as an aliphatic 5- or 6-membered ring, preferably containing at least one or two heteroatoms, more preferably one or two ether oxygens in the ring structure. It is most preferable when R² in formula (I) is according to one of groups in formulas (Ia) to (Ic) 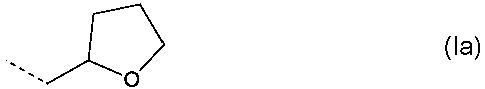 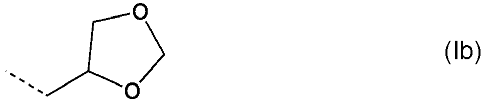 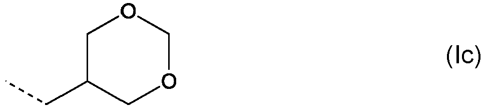 wherein the dashed lines in formulas (Ia) to (Ic) represent the bond between the oxygen atom and R². Examples of such monomers **M** are especially tetrahydrofurfuryl methacrylate (THFMA).

In another preferred embodiment, R² in formula (I) is a radical having 4 to 12 carbon atoms comprising a bicyclic moiety. It is most preferably when R² in formula (I) is according to one of the groups in formula (Id) to (Ie) 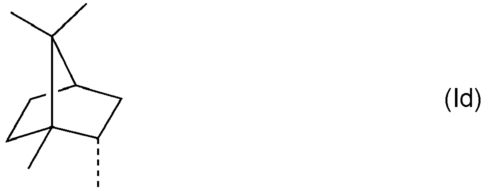 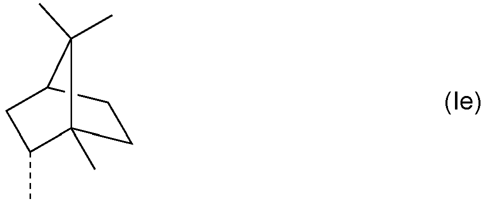 wherein the dashed lines in formulas (Ia) to (Ic) represent the bond between the oxygen atom and R². Examples of such monomers **M** are especially isobornyl methacrylate (CAS-No. 7534-94-3), which is available from Evonik under the trade name VISIOMER^{®} Terra IBOMA and based to a significant degree on renewable sources.

In another preferred embodiment, R² in formula (I) is a radical having 4 to 12 carbon atoms comprising an aromatic moiety. It is most preferably when R² in formula (I) is according to one of the groups in formula (If) to (Ie) 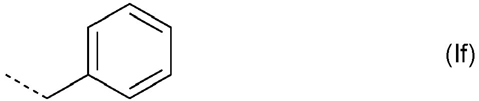 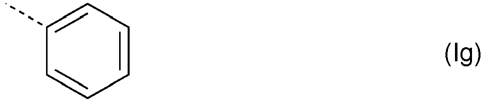 wherein the dashed lines in formulas (If) to (Ig) represent the bond between the oxygen atom and R². Examples of such monomers **M** are especially benzyl methacrylate (BNMA).

Preferably, the monomer **M** is present in an amount that ranges from 20 to 50 wt.-%, more preferably from 25 to 45 wt.-%, most preferably from 30 to 40 wt.-%, based on the total weight of the component **C1.**

Preferably, the inventive composition does not contain methyl methacrylate (MMA).

In another preferred embodiment, monomer **M** does not contain glycerol formal methacrylate (GLYFOMA).

It goes without saying that mixtures of these monomers **M** may also be employed.

Component **C1** further comprises least one elastomer **E1** according to formula (II) 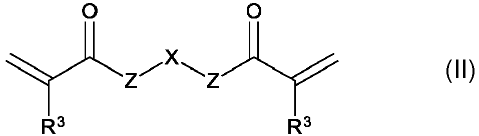 wherein
X represents a polymeric diol after removal of two OH groups, wherein the polymeric diol is not a polyester diol;
Z represents O or NR', wherein R' is a hydrocarbyl radical or a hydrogen radical, preferably a hydrogen radical;
R³ represents either a hydrogen radical or a methyl group.

The elastomer **E1** of formula (II) preferably has an average molecular weight of 500 to 40'000 g/mol, preferably 1'000 to 20'000 g/mol, most preferably 2'000 to 10'000 g/mol

In the elastomer **E1** of formula (II) the radical X is a polymeric diol after removal of two OH groups, wherein this polymeric diol is in particular a polyalkylene diol, a polyoxyalkylene diol or a polyurethane diol; a polyhydroxy-functional ethylene-propylene, ethylene-butylene or ethylene-propylene-diene copolymer; a polyhydroxy-functional copolymer of dienes such as 1,3-butadiene or diene mixtures and vinyl monomers such as styrene, acrylonitrile or isobutylene; a polyhydroxy-functional polybutadiene polyol; a polyhydroxy-functional acrylonitrile/butadiene copolymer; or a polysiloxane diol.

Polyhydroxy-terminated acrylonitrile/butadiene copolymers are typically produced from carboxyl-terminated acrylonitrile/butadiene copolymers, commercially available for example under the name Hycar^{®} CTBN from Emerald Performance Materials, LLC, USA, and epoxides or amino alcohols. Suitable elastomers **E1** of formula (II) are commercially available for example from Kraton Polymers, USA, or under the trade names Hycar^{®} VTB and Hycar^{®} VTBNX from Emerald Performance Materials, LLC, USA.

The elastomer **E1** of formula (II) is preferably a polyurethane (meth)acrylate. Such compounds are typically producible from the reaction of at least one diol **DO1** with at least one diisocyanate **DI** and one (meth)acrylic acid, one (meth)acrylamide or one (meth)acrylic ester having a hydroxyl group.

In a first process this reaction may be carried out by reacting the diol **DO1** and the diisocyanate **DI** by customary processes, for example at temperatures of 50°C to 100°C, optionally with co-use of suitable catalysts, ensuring that the NCO groups are present in stoichiometric excess relative to the OH groups. The isocyanate-terminated polyurethane polymer resulting from this reaction is then reacted with a (meth)acrylic acid, a (meth)acrylamide or with a (meth)acrylic ester having a hydroxyl group, in particular with a hydroxyalkyl (meth)acrylate such as hydroxypropyl acrylate (HPA), hydroxypropyl methacrylate (HPMA), hydroxybutyl acrylate (HBA) or hydroxybutyl methacrylate (HBMA), preferably with hydroxyethyl acrylate (HEA) or hydroxyethyl methacrylate (HEMA), or with a monohydroxypoly(meth)acrylate of a polyol, preferably of glycerol or trimethylolpropane, to afford a polyurethane (meth)acrylate.

In a second process the diol **DO1** may be reacted with the diisocyanate **DI,** wherein the OH groups are present in stoichiometric excess relative to the NCO groups. The hydroxyl-terminated polyurethane polymer resulting from this reaction may be esterified with a (meth)acrylic acid to afford the elastomer **E1** of formula (II).

A further process for producing the elastomer **E1** comprises a first step of reacting the (meth)acrylic acid, the (meth)acrylamide or the (meth)acrylic ester having a hydroxyl group, in particular hydroxyalkyl (meth)acrylate such as hydroxypropyl acrylate (HPA), hydroxypropyl methacrylate (HPMA), hydroxybutyl acrylate (HBA) or hydroxybutyl methacrylate (HBMA), preferably hydroxyethyl acrylate (HEA) or hydroxyethyl methacrylate (HEMA), or a monohydroxypoly(meth)acrylate of a polyol, preferably of glycerol or trimethylolpropane, with at least one diisocyanate **DI** which is employed in an amount such that the NCO groups are present in excess relative to the OH groups. In a subsequent reaction the resulting intermediate comprising an isocyanate group is reacted with at least one diol **DO1** to afford the elastomer **E1** of formula (II).

It is also possible to produce the elastomer **E1** of formula (II) by esterification of a (meth)acrylic acid with a diol **DO1,** wherein the diol **DO1** is in stoichiometric excess. In a subsequent reaction the partially esterified diol reacts with a diisocyanate **DI** to afford the elastomer **E1** of formula (II).

Preferred diols **DO1** are polyoxyalkylene diols, also known as "polyether diols", polycarbonate diols and mixtures thereof. The most preferred diols are polyoxyethylene diols, polyoxypropylene diols or polyoxybutylene diols.

The polyoxyalkylene diols may have different degrees of unsaturation (measured according to ASTM D-2849-69 and reported in milliequivalents of unsaturation per gram of polyol (mEq/g)). Those with a low degree of unsaturation are produced for example using so-called double metal cyanide complex catalysts (DMC catalysts) while those with a higher degree of unsaturation are produced for example using anionic catalysts such as NaOH, KOH, CsOH or alkali metal alkoxides.

The use of polyoxyalkylene diols having a low degree of unsaturation, in particular of less than 0.01 mEq/g, is preferred for diols having a molecular weight of ≥ 2000 g/mol.

Suitable diisocyanates **DI** in principle include all diisocyanates. Examples include hexamethylene 1,6-diisocyanate (HDI), 2-methylpentamethylene 1,5-diisocyanate, 2,2,4- and 2,4,4-trimethylhexamethylene 1,6-diisocyanate (TMDI), dodecamethylene 1,12-diisocyanate, lysine and lysine ester diisocyanate, cyclohexane 1,3-diisocyanate, cyclohexane 1,4-diisocyanate, 1-isocyanato-3,3,5-trimethyl-5-isocyanatomethylcyclohexane (= isophorone diisocyanate or IPDI), perhydro-2,4'-diphenylmethane diisocyanate and perhydro-4,4'-diphenylmethane diisocyanate, 1,4-diisocyanato-2,2,6-trimethylcyclohexane (TMCDI), 1,3- and 1,4-bis(isocyanatomethyl)cyclohexane, m- and p-xylylene diisocyanate (m- and p-XDI), m- and p-tetramethyl-1,3-xylylene diisocyanate, m- and p-tetramethyl-1,4-xylylene diisocyanate, bis(1-isocyanato-1-methylethyl)naphthalene, tolylene 2,4-diisocyanate and 2,6-diisocyanate (TDI), diphenylmethane 4,4'-diisocyanate, 2,4'-diisocyanate, and 2,2'-diisocyanate (MDI), phenylene 1,3-diisocyanate and 1,4-diisocyanate, 2,3,5,6-tetramethyl-1,4-diisocyanatobenzene, naphthalene 1,5-diisocyanate (NDI), 3,3'-dimethyl-4,4'-diisocyanatobiphenyl (TODI), oligomers and polymers of the abovementioned isocyanates and also any desired mixtures of the abovementioned isocyanates.

Isophorone diisocyanate (IPDI) and methylene diphenyl diisocyanate (MDI) are especially preferred diisocyanates.

In a preferred embodiment, the elastomer **E1** is a polyurethane (meth)acrylate with a polyether backbone, obtained from the reaction of at least one diol **DO1,** in particular a polyether diol, preferably a polyoxypropylene diol, with at least one diisocyanate **DI** and one (meth)acrylic ester having a hydroxyl group, wherein
- The diol **DO1** reacts with a diisocyanate **DI,** preferably isophorone diisocyanate (IPDI) or methylene diphenyl diisocyanate (MDI), which is present in stochiometric excess.
- And the resulting isocyanate-terminated polyurethane is reacted with the (meth)acrylic ester having a hydroxyl group, in particular with a hydroxyalkyl (meth)acrylate, preferably with hydroxyethyl acrylate (HEA) or hydroxyethyl methacrylate (HEMA), to afford the elastomer **E1** of formula (II).

Preferably, the elastomer **E1** is present in an amount that ranges from 5 to 40 wt.-%, more preferably from 10 to 30 wt.-%, most preferably from 10 to 25 wt.-%, based on the total weight of the component **C1.**

Component **C1** further comprises least one elastomer **E2** according to formula (III) 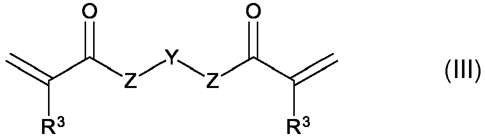 wherein
Y represents a polymeric diol after removal of two OH groups, wherein the polymeric diol is a polyester diol;
Z represents O or NR', wherein R' is a hydrocarbyl radical or a hydrogen radical, preferably a hydrogen radical;
R³ represents either a hydrogen radical or a methyl group;

The elastomer **E2** of formula (III) preferably has an average molecular weight of 500 to 40'000 g/mol, preferably 1'000 to 20'000 g/mol, most preferably 2'000 to 10'000 g/mol.

In the elastomer **E2** of formula (III) the radical Y is a polymeric polyester diol after removal of two OH groups, wherein this polymeric polyester diol is in particular a Poly(ε-caprolactone) (PCL) diol, a Poly(d,l-lactide) (PDLLA) diol, a poly(glycolide) (PGA) diol, a poly(ethylene adipate) diol, a polyester based on 3-methyl-1,5-pentanediol (MPD) and adipic acid, a polyester based on 3-methyl-1,5-pentanediol (MPD) and terephthalic acid, a polyester based on 3-methyl-1,5-pentanediol (MPD) and isophthalic acid, a polyester based on 3-methyl-1,5-pentanediol (MPD) and sebacic acid, or a dimer fatty acid polyester diol.

The elastomer **E2** of formula (III) is preferably a polyurethane (meth)acrylate. Such compounds are typically producible from the reaction of at least one diol **DO2** with at least one diisocyanate **DI**, thus forming an NCO-functional polyurethane prepolymer, and subsequent endcapping of the prepolymer with a (meth)acrylic acid, a (meth)acrylamide, or a (meth)acrylic ester having a hydroxyl group, respectively.

In a first process this reaction may be carried out by reacting the diol **DO2** and the diisocyanate **DI** by customary processes, for example at temperatures of 50°C to 100°C, optionally with co-use of suitable catalysts, ensuring that the NCO groups are present in stoichiometric excess relative to the OH groups. The isocyanate-terminated polyurethane polymer resulting from this reaction is then reacted with a (meth)acrylic acid, a (meth)acrylamide or with a (meth)acrylic ester having a hydroxyl group, in particular with a hydroxyalkyl (meth)acrylate such as hydroxypropyl acrylate (HPA), hydroxypropyl methacrylate (HPMA), hydroxybutyl acrylate (HBA) or hydroxybutyl methacrylate (HBMA), preferably with hydroxyethyl acrylate (HEA) or hydroxyethyl methacrylate (HEMA), or with a monohydroxypoly(meth)acrylate of a polyol, preferably of glycerol or trimethylolpropane, to afford a polyurethane (meth)acrylate.

In a second process the diol **DO2** may be reacted with the diisocyanate **DI,** wherein the OH groups are present in stoichiometric excess relative to the NCO groups. The hydroxyl-terminated polyurethane polymer resulting from this reaction may be esterified with a (meth)acrylic acid to afford the elastomer **E2** of formula (III).

A further process for producing the elastomer **E2** comprises a first step of reacting the (meth)acrylic acid, the (meth)acrylamide or the (meth)acrylic ester having a hydroxyl group, in particular hydroxyalkyl (meth)acrylate such as hydroxypropyl acrylate (HPA), hydroxypropyl methacrylate (HPMA), hydroxybutyl acrylate (HBA) or hydroxybutyl methacrylate (HBMA), preferably hydroxyethyl acrylate (HEA) or hydroxyethyl methacrylate (HEMA), or a monohydroxypoly(meth)acrylate of a polyol, preferably of glycerol or trimethylolpropane, with at least one diisocyanate **DI** which is employed in an amount such that the NCO groups are present in excess relative to the OH groups. In a subsequent reaction the resulting intermediate comprising an isocyanate group is reacted with at least one diol **DO2** to afford the elastomer **E2** of formula (III).

It is also possible to produce the elastomer **E2** of formula (III) by esterification of a (meth)acrylic acid with a diol **DO2**, wherein the diol **DO2** is in stoichiometric excess. In a subsequent reaction the partially esterified diol reacts with a diisocyanate **DI** to afford the elastomer **E2** of formula (III).

Preferred diols **DO2** are polyester diols. The most preferred polyester diols are obtained by reacting 3-methyl-1,5-pentanediol (MPD) with carboxylic acids like adipic acid, terephthalic acid, isophthalic acid, or sebacic acid.

Suitable diisocyanates **DI** for the production of elastomer **E2** of formula (III) include for example the same diisocyanaates **DI** as described for the production of elastomer **E1** of formula (II).

In a preferred embodiment, the elastomer **E2** is a polyurethane (meth)acrylate with a polyester backbone, obtained from the reaction of at least one diol **DO2,** in particular a polyester diol, preferably based on 3-methyl-1,5-pentanediol (MPD) and sebacic acid, with at least one diisocyanate **DI** and one (meth)acrylic ester having a hydroxyl group,
wherein
- The diol **DO2** reacts with a diisocyanate **DI,** preferably isophorone diisocyanate (IPDI) or methylene diphenyl diisocyanate (MDI), which is present in stochiometric excess.
- And the resulting isocyanate-terminated polyurethane is reacted with the (meth)acrylic ester having a hydroxyl group, in particular with a hydroxyalkyl (meth)acrylate, preferably with hydroxyethyl acrylate (HEA) or hydroxyethyl methacrylate (HEMA), to afford the elastomer **E2** of formula (III).

Preferably, the elastomer **E2** is present in an amount that ranges from 1 to 40 wt.-%, more preferably from 5 to 35 wt.-%, most preferably from 5 to 30 wt.-%, based on the total weight of the component **C1.**

In a preferred embodiment, the component **C1** additionally contains between 0.5 wt.-% to 5 wt.-%, preferably between 0.75 to 3 wt.-%, most preferably between 1 to 2.5 wt.-%, based on the total weight of component **C1,** of an adhesion promoter, in particular an organosilane, and/or a metal (meth)acrylate or a (meth)acrylate of formula (IV). 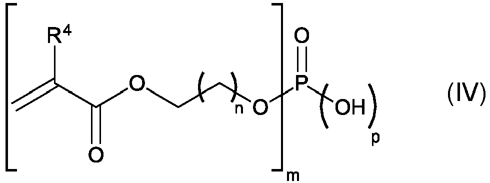
The radical R⁴ is either a hydrogen atom or a methyl group;
n represents a value from 1 to 15, in particular from 1 to 5, preferably from 1 to 3;
m represents a value from 1 to 3;
p represents a value of 3 minus m.

Preferred metal (meth)acrylates are metal (meth)acrylates of calcium, magnesium or zinc having a hydroxyl group and/or (meth)acrylic acid or (meth)acrylate as a ligand or anion. Particularly preferred metal (meth)acrylates are zinc (meth)acrylate, calcium (meth)acrylate, Zn(OH) (meth)acrylate and magnesium (meth)acrylate.

Preferred (meth)acrylates of formula (II) are 2-methacryloyloxyethyl phosphate, bis(2-methacryloyloxyethyl) phosphate and tris(2-methacryloyloxyethyl) phosphate and mixtures thereof.

Preferred organosilanes are epoxy-functional silanes, in particular 3-glycidoxypropyltrimethoxysilane.

Adhesion promoters are used to improve adhesion to special substrates. The use of phosphorus-containing (meth)acrylates according to formula (II) is especially advantageous for metal surfaces (aluminum, anodized aluminum, etc.). Organosilanes improve adhesion to glass and ceramic surfaces.

Metal (meth)acrylates are also advantageous for bonding to metal surfaces for example.

It goes without saying that mixtures of different adhesion promoters may also be employed.

Preferably, the mass ratio of elastomer **E1** to elastomer **E2** ranges from 40:1 to 1:3, preferably from 5:1 to 1:2, most preferably from 2:1 to 1:1.

The two-component composition according to claims 1 to 5, characterized in that the composition in component **C1** additionally contains 5 to 40 wt.-%, preferably 10 to 30 wt.-%, based on the total weight of **C1,** of at least one filler **F,** particularly a calcium carbonate, preferably a coated calcium carbonate.

Especially suitable fillers **F** include natural, ground or precipitated calcium carbonates (chalks), which are optionally coated with fatty acids, in particular stearates, montmorillonites, bentonites, barium sulfate (BaSO₄, also known as barite or heavy spar), calcined kaolins, quartz flour, aluminum oxides, aluminum hydroxides, silicas, in particular pyrogenic silicas, modified castor oil derivatives and polymer powders or polymer fibers. Calcium carbonates are preferred and coated calcium carbonates are most preferred.

In a preferred embodiment, the composition in component **C1** additionally contains 0.1 to 2.5 wt.-%, preferably 0.5 to 2 wt.-%, based on the total weight of **C1,** of at least one activator for free-radical curing **A,** wherein the activator **A** preferably is N,N-bis(2-hydroxyethyl)-para-toluidine.

Such an activator for free-radical curing **A** is in particular a tertiary amine, in particular an aromatic amine, a transition metal salt or a transition metal complex, preferably N,N-bis(2-hydroxyethyl)-para-toluidine.

Examples of such suitable tertiary amines are N,N-dimethylaniline, N,N-diethylaniline, N,N-dimethyl-p-toluidine, N,N-diethyl-p-toluidine, N-methyl-N-hydroxyethyl-p-toluidine, N,N-*bis*(2-hydroxyethyl)-*p*-toluidine and alkoxylated N,N-*bis*(hydroxyethyl)-*p*-toluidines, N-ethoxylated *p*-toluidine, N-alkylmorpholine and mixtures thereof. Transition metal salts and transition metal complexes are for example salts and complexes of cobalt, nickel, copper, manganese or vanadium. Mixtures of such substances may also be used as activator. N,N-bis(2-hydroxyethyl)-para-toluidine is most preferred as activator.

In a preferred embodiment, the composition in component **C1** additionally contains between 1 to 30 wt.-%, preferably between 5 to 20 wt.-%, based on the total weight of **C1,** of at least one core-shell polymer **CSP,** preferably the **CSP** is a methacrylate butadiene styrene (MBS) polymer.

Core-shell polymers **CSP** consist of an elastic core polymer (core) and a rigid shell polymer (shell). Especially suitable core-shell polymers consist of a rigid shell of a rigid thermoplastic polymer grafted onto a core of crosslinked elastic acrylate or butadiene polymer.

Particularly suitable core-shell polymers **CSP** are those which swell up in monomer **M** but do not dissolve therein.

Preferred core-shell polymers **CSP** are MBS polymers which are commercially available for example under the trade name Clearstrength^{®} from Arkema Inc., USA, or Paraloid^{®} from Rohm and Haas, USA.

It is preferable when the composition in component **C1** additionally contains an inhibitor for free-radical curing. This is selected from substances which slightly retard or moderate the free-radical mechanisms of curing or inhibit undesired curing reactions (for example UV light- or atmospheric oxygen-induced mechanisms), thus leading to improved storage stability and/or a more controlled, more uniform curing.

It is preferable when component **C1** contains between 0.001% wt.-% to 0.5% wt.-%, based on the total weight of component **C1,** of at least one inhibitor for free-radical curing, in particular an alkylated phenol, preferably 2,6-di-*tert*-butyl-p-cresol.

Preferably the component **C2** contains 5 to 75 wt.-%, preferably 10 to 50 wt.-%, based on the total weight of **C2,** of the at least one initiator for free-radical curing **I,** in particular a thermally activatable free-radical former, preferably a peroxide, a hydroperoxide or a perester, most preferably dibenzoyl peroxide (DBPO), or a photoinitiator, in particular a photoinitiator which forms free-radicals upon irradiation with electromagnetic radiation having a wavelength of 230 nm to 400 nm.

The initiator I is a free-radical former that forms reactive free-radicals, thus initiating the free-radical curing mechanism of the monomers in component **C1.**

Molecules suitable as such free-radical formers are in particular those which, under the influence of heat or electromagnetic radiation, form free-radicals which then result in polymerization of the composition.

Free-radical formers especially include thermally activatable free-radical formers and photoinitiators.

Preferred thermally activatable free-radical formers especially include those which are still sufficiently stable at room temperature but form radicals at even slightly elevated temperature. Such free-radical formers include in particular a peroxide, a perester or a hydroperoxide. Organic peroxides are preferred. Dibenzoyl peroxide is most preferred.

Photoinitiators are free-radical formers which form free-radicals under the influence of electromagnetic radiation. Especially suitable is a photoinitiator which forms free radicals upon irradiation with electromagnetic radiation having a wavelength of 230 nm to 400 nm and is liquid at room temperature.

It is particularly preferable when the photoinitiator is selected from the group consisting of α-hydroxyketones, phenylglyoxylates, monoacylphosphines, diacylphosphines, phosphine oxides and mixtures thereof, in particular 1-hydroxycyclohexylphenylketone, benzophenone, 2-hydroxy-2-methyl-1-phenylpropanone, methylphenyl glyoxylate, oxyphenylacetic acid 2-[2-oxo-2-phenyl-acetoxyethoxy]ethyl ester, oxyphenylacetic acid 2-[2-hydroxyethoxy]ethyl ester, diphenyl(2,4,6-trimethylbenzoyl)phosphine oxide, phenylbis(2,4,6-trimethylbenzoyl)phosphine oxide and mixtures thereof. Such photoinitiators are for example commercially available from the IRGACURE^{®} and DAROCUR^{®} product lines of Ciba Speciality Chemicals, Switzerland.

Mixtures of photoinitiators may also be used.

Dibenzoyl peroxide is most preferred as the initiator **I** in component **C2.** This is preferably employed dispersed in a plasticizer.

Preferably, the component **C2** contains 10 to 60 wt.-%, more preferably 20 to 50 wt.-%, based on the total weight of component **C2,** of at least one plasticizer **P.** Suitable plasticizers **P** include all nonreactive substances which are liquid at room temperature and are typically employed in (meth)acrylate compositions in this function.

Preferably, the component **C2** contains 10 to 80 wt.-%, more preferably 20 to 70 wt.-%, based on the total weight of component **C2,** of at least one filler **F.** Suitable fillers include for example the same fillers as described for component **C1.**

Component **C2** of the composition according to the invention preferably additionally contains at least one additive selected from the group consisting of thixotropic additive and/or colorant.

Suitable colorants include nonreactive organic dyes and pigments.

Suitable thixotropic additives include all such additives typically used in (meth)acrylate compositions.

The composition may optionally additionally contain further constituents in one or both components. Such additional constituents include impact modifiers, dyes, pigments, inhibitors, UV and heat stabilizers, metal oxides, antistats, flame retardants, biocides, plasticizers, waxes, leveling agents, adhesion promoters, thixotropic agents, spacers and further raw materials and additives known to a person skilled in the art.

The two-component composition according to claims 1 to 10, characterized in that the component **C1** contains 10 to 60 wt.-%, preferably of 15 to 55 wt.-%, most preferably of 20 to 50 wt.-%, based on the total weight of the composition, of bio-based or bio-based derived contents.

The composition according to the invention is a two-component composition, wherein the two components **C1** and **C2** thereof are stored separately from one another until application. The first component **C1** especially includes those ingredients of the described composition which comprise free-radically polymerizable groups. The second component **C2** especially includes the free-radical formers, also known as initiators. Furthermore, other constituents, in particular those that impair the storage stability of the composition through reaction with one another, can also be stored separately in a two-component composition.

In the described two-component compositions it is typically the case that component **C1** comprises the constituents monomers, elastomers, core-shell polymers, catalysts, adhesion promoters, pigments and fillers, and component **C2** comprises the constituents free-radical initiators, pigments and fillers. The mixing ratio of **C1** to **C2** is especially in the range from 1:1 to 10:1.

In certain cases, it may be advantageous to give the two components **C1** and **C2** different colors. This allows the mixing quality to be checked during mixing of the components and mixing errors can be detected at an early stage. This measure also allows qualitative checking of whether the intended mixing ratio has been observed.

A further aspect of the invention relates to a package composed of a packaging and packaged material.

The packaging comprises two chambers separated from one another. The packaged material is a two-component free-radically curing composition consisting of a first component **C1** and a second component **C2** as described above. Component **C1** is in one chamber of the packaging and component **C2** is in the other chamber of the packaging.

The packaging especially forms a unit in which the two chambers are held together or directly bound to one another.

The separating means between the chambers may for example be a film or a breakable layer or one or two closures sealing an opening. In a preferred embodiment the packaging is a double cartridge.

Such cartridge packaging is known in the prior art for two-component compositions and disclosed for example in WO2008151849.

A further packaging option is a multi-chamber tubular bag or a multi-chamber tubular bag with an adapter, as disclosed for example in WO 01/44074 A1.

It is preferable when the mixing of the two components **C1** and **C2** is effected using a static mixer which may be attached to the packaging with two chambers preferably used for this process.

In an industrial-scale plant, the two components **C1** and **C2** are typically stored separately from one another in vats or hobbocks and expressed and mixed on application, for example using gear pumps. The composition may be applied to a substrate manually or in an automated process using a robot.

The invention further comprises the use of a composition as described above as a sealant or adhesive or for producing coatings. The invention especially comprises the use of the composition for bonding materials having different linear coefficients of thermal expansion, for example for bonding glass and ceramic substrates with plastics and/or metals. The composition is especially suitable for bonding materials whose linear coefficients of thermal expansion have a ratio to one another of ≥ 2:1. In particular the linear coefficients of thermal expansion of the substrates to be bonded have a ratio to one another of ≥ 3:1 when the substrates to be bonded are glass or a ceramic substrate and a metal; and a ratio of ≥ 8:1 when the substrates to be bonded are glass or a ceramic substrate and a plastic. The linear coefficients of thermal expansion especially have a ratio to one another of ≤ 10'000:1, preferably of ≤ 100:1. The invention most preferably comprises the use of a composition as described above as an adhesive or sealant in window construction where glass is bonded with plastics and/or metals, in particular with aluminum and/or polyvinyl chloride (PVC), most preferably with PVC.

The term "aluminum" is presently also to be understood as meaning alloys of aluminum, in particular with copper, magnesium, silicon, manganese and/or zinc. The aluminum may further be subjected to a surface treatment prior to application of the composition. Here, mechanical (grinding, brushing, irradiating, etc.) and/or chemical (pickling, etching, etc.) removal of the oxide layer of the aluminum is typically followed by controlled oxidation of the aluminum, for example by electrolytic oxidation of aluminum (ELOXAL). A further process for surface treatment is so-called enameling, where other inorganic layers, predominantly composed of oxides and silicates, are applied to the aluminum.

The use of a composition according to the invention as a sealant for hem flange bonds is also preferred.

The substrate on whose surface the mixed composition is applied may have been subjected to prior treatment with suitable pretreatment means or cleaning agents. It is particularly suitable to effect pretreatment/cleaning of the substrates with Sika^{®}Cleaner P or Sika^{®} ADPrep which are commercially available from Sika Schweiz AG.

Pretreatment of the substrates with primers and/or adhesion promoters may be useful in certain cases but compositions according to the invention have proven particularly advantageous because they may be applied primerlessly to numerous substrates, in particular to glass, PVC and aluminum, without adverse effects on adhesion.

The invention further comprises a process for bonding substrates S1 and S2 comprising the steps of
i) applying a composition as described above to a substrate S1;
ii) contacting the applied composition with a second substrate S2 within the open assembly time;
   or

i') applying a composition as described above to a substrate **S1;**
ii') applying a composition as described above to a substrate **S2;**
iii') joining the two substrates **S1** and **S2** to which composition has been applied within the open assembly time;
wherein the second substrate **S2** is composed of a material identical or different to that of substrate **S1.** Steps i) or i') and ii') are preceded by a step I) of at partial or complete mixing of the two components.

The invention further comprises a process of sealing or coating a substrate **S1** comprising the steps of
i") applying a composition as described above to a substrate **S1;**
ii") curing the composition.

Step i") is preceded by a step I) of at partial or complete mixing of the two components.

The present invention further comprises a cured composition obtained from an above-described composition by a curing process. In cured form the composition has the feature that it does not exhibit viscoelastic behavior and that compressive stress therefore results in no, or almost no, plastic deformation of the composition.

The invention likewise comprises articles bonded or sealed by an above-described process. These articles are preferably a built structure, in particular an above- or below-ground built structure, or an industrial product or a consumer good, in particular a window, a domestic appliance, a tool or a means of transport, in particular a vehicle for traveling on water or land, preferably an automobile, a bus, a truck, a train or a ship. Such articles are preferably also attachable components for industrial products or means of transport, in particular also modular parts, which are used as modules on the manufacturing line and in particular attached or installed by bonding. These prefabricated attachable components are especially employed in the construction of means of transport. Such attachable components include for example drivers cabs of trucks or of locomotives or sunroofs of automobiles. These articles are preferably windows and doors, such as are used in built structures.

### Examples

Examples intended to illustrate the effect of the invention are described hereinbelow.

### Production of the elastomer E1

The elastomer **E1** was produced as follows:
849 g of polyoxypropylene diol (Acclaim^{®} 4200 N, Bayer MaterialScience; OH number 28.5 KOH/g) and 101 g of 1-isocyanato-3,3,5-trimethyl-5-isocyanatomethylcyclohexane (isophorone diisocyanate or IPDI; Desmodur^{®} I, Bayer MaterialScience) were reacted at 60°C to afford an isocyanate-terminated polyurethane polymer having a titrimetrically determined content of free isocyanate groups of 1.88% by weight. Subsequently, 10 g of hydroxyethyl methacrylate (HEMA), which reacts with the free isocyanate groups to afford elastomer **E1** of formula (II), was added.

### Production of the elastomer E2

The elastomer **E2** was produced as follows:
824 g of a polyester diol based on 3-methyl-1,5-pentanediol (MPD) and sebacic acid (Kuraray Polyol P4050, Kuraray Co., Ltd; OH number 28 KOH/g) and 73 g of 1-isocyanato-3,3,5-trimethyl-5-isocyanatomethylcyclohexane (= isophorone diisocyanate or IPDI; Desmodur^{®} I, Bayer MaterialScience) were reacted at 60°C to afford an isocyanate-terminated polyurethane polymer having a titrimetrically determined content of free isocyanate groups of 1.16% by weight. Subsequently, 102 g of hydroxyethyl methacrylate (HEMA), which reacts with the free isocyanate groups to afford elastomer **E2** of formula (III), was added.

### Production of the compositions

The following compositions were produced:
For the first component **C1** the constituents specified in tables 1 and 2 in the reported amounts were mixed with one another and incorporated by stirring in a dissolver at a temperature of not more than 80°C until a macroscopically homogeneous paste was obtained.

For the second component **C2,** the constituents specified in tables 1 and 3 in the reported amounts were mixed with one another in a dissolver. This component **C2** was used identically with all respective component **C1** from tables 1 and 2 for all experiments.

The produced components **C1** and **C2** were filled into the separate chambers of coaxial cartridges and, in use, employed in a **C1:C2** volume ratio of 10:1.

### Material tests

The **lap shear strength** was measured according to ISO 4587/DIN EN 1465 on PVC.

The **facture pattern evaluation** was measured according to DIN ISO 10365. The fracture pattern was evaluated by eye according to the following code:

| | |
|---|---|
| AF | >50% adhesive failure and <50% cohesive failure |
| CF | >50% cohesive failure and <50% adhesive failure |

The **glass transition temperature** was measured according to DIN EN ISO 6721-2.

The **elongation at break** was determined according to DIN EN 53504 (tensile test speed: 200 mm/min) on films having a layer thickness of 2 mm which cure over 7 days under standard climatic conditions (23±1°C, 50±5% relative humidity). The measurements were carried out on test specimens that had been stored at a room temperature of 23°C ("RT") and also on test specimens of identical composition that had been stored at -20°C for 24 hours after curing and were tested directly from the cold cabinet ("-20").

### Compounds used in compositions

**Table 1: Compounds used for the example compositions.**

| **Name** | **Description** | **Trade name** |
|---|---|---|
| Monomer **M** | Isobornyl methacrylate | Visiomer^{®} Terra IBOMA |
| Elastomer **E1** | Acrylate urethane with polyether backbone | Synthesis see above |
| Elastomer **E2** | Acrylate urethane with polyester backbone | Synthesis see above |
| Filler **F1** | Coated precipitated calcium carbonate | Socal^{®} U1S2 |
| Activator **A** | amine accelerator for peroxide initiators | Bisomer^{®} PTE |
| Core-shell polymer **CSP** | Methacrylate-butadienestyrene copolymer | Kan Ace^{™} B660 |
| Initiator **I** | Dibenzoyl peroxide | |
| Filler **F2** | Chalk | |
| Plasticizer **P** | Castor oil | |

### Compositions used in Material Tests

### Comparative examples are identified in Tables 2 to 4 by "(Ref.)".

**Table 2: Composition of component C1. Values are in wt.-% totaling 100%.**

| **Component C1** | **E-1** (Ref.) | **E-2** (Ref.) | **E-3** | **E-4** |
|---|---|---|---|---|
| Monomer **M** | 35 | 35 | 35 | 35 |
| Elastomer **E1** | 30 | - | 15 | 20 |
| Elastomer **E2** | - | 30 | 15 | 10 |
| Filler **F1** | 22 | 22 | 22 | 22 |
| Activator **A** | 1 | 1 | 1 | 1 |
| Core-shell polymer **CSP** | 12 | 12 | 12 | 12 |

**Table 3: Composition of component C2. Values are in wt.-% totaling 100%.**

| **Component C2** | |
|---|---|
| Initiator **I** | 10 |
| Filler **F2** | 50 |
| Plasticizer **P** | 40 |

### Material Tests

The material test results in table 4 show that only the selected combinations of inventive elastomers **E1** and **E2** result in sufficient lap shear strength and cohesive failure fracture pattern at room temperature coupled with sufficient low-temperature elasticity.

**Table 4: Material Tests. AF means "adhesive failure", CF means "cohesive failure".**

| **Test results** | | **E-1** (Ref.) | **E-2** (Ref.) | **E-3** | **E-4** |
|---|---|---|---|---|---|
| Lap shear strength (MPa) | | 2 | 10 | 9 | 10 |
| Fracture pattern evaluation | | AF | CF | CF | CF |
| Glass transition temperature T_{g} (°C) | | 70 | 83 | 78 | 74 |
| Elongation at break (%) | +23°C | 198 | 181 | 213 | 218 |
| Elongation at break (%) | -20°C | 154 | 52 | 83 | 171 |
| Deviation (%) | | -22 | -71 | -61 | -22 |

## Claims

1. A two-component composition consisting of a first component **C1** comprising
- at least one monomer **M** according to formula (I) 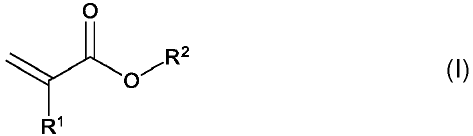 wherein
R¹ represents a hydrogen radical or a methyl group, preferably a methyl group;
R² represents a monovalent hydrocarbyl radical having 2 to 20 carbon atoms and which optionally contains one or more C-C multiple bonds, and/or cycloaliphatic moieties, and/or aromatic moieties;
- at least one elastomer **E1** according to formula (II) 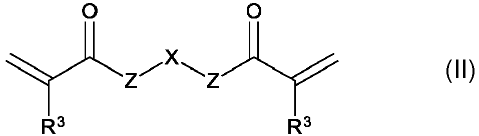 wherein
X represents a polymeric diol after removal of two OH groups, wherein the polymeric diol is not a polyester diol;
Z represents O or NR', wherein R' is a hydrocarbyl radical or a hydrogen radical, preferably a hydrogen radical;
R³ represents either a hydrogen radical or a methyl group;
- at least one elastomer **E2** according to formula (III) 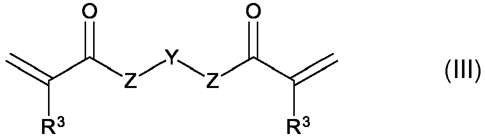 wherein
Y represents a polymeric diol after removal of two OH groups, wherein the polymeric diol is a polyester diol;
Z represents O or NR', wherein R' is a hydrocarbyl radical or a hydrogen radical, preferably a hydrogen radical;
R³ represents either a hydrogen radical or a methyl group;
- preferably at least one additive selected from the group consisting of core-shell polymer, activator for free-radical curing, inhibitor for free-radical curing, filler and adhesion promoter.
And a second component **C2** comprising
- at least one initiator for free-radical curing
- preferably at least one additive selected from the group consisting of plasticizer, filler, thixotropic agent and pigment.

2. The two-component composition according to claim 1, **characterized in that** the monomer **M** is according to formula (I), wherein R² represents either a linear or branched hydroxyalkyl group having 2 to 6 carbon atoms or a radical having 4 to 12 carbon atoms comprising a cycloaliphatic moiety, especially a five- and six-membered ring, preferably containing at least one heteroatom such as oxygen or a bicyclic moiety such as an isobornyl radical or an aromatic moiety such as a phenyl or benzyl radical.

3. The two-component composition according to any claims 1 to 2, **characterized in that** the elastomer **E1** is a polyurethane (meth)acrylate with a polyether backbone, obtained from the reaction of at least one diol **DO1,** in particular a polyether diol, preferably a polyoxypropylene diol, with at least one diisocyanate **DI** and one (meth)acrylic ester having a hydroxyl group,
wherein
- The diol **DO1** reacts with a diisocyanate **DI,** preferably isophorone diisocyanate (IPDI) or methylene diphenyl diisocyanate (MDI), which is present in stochiometric excess.
- And the resulting isocyanate-terminated polyurethane is reacted with the (meth)acrylic ester having a hydroxyl group, in particular with a hydroxyalkyl (meth)acrylate, preferably with hydroxyethyl acrylate (HEA) or hydroxyethyl methacrylate (HEMA), to afford the elastomer **E1** of formula (II).

4. The two-component composition according to any claims 1 to 3, **characterized in that** the elastomer **E2** is a polyurethane (meth)acrylate with a polyester backbone, obtained from the reaction of at least one diol **DO2,** in particular a polyester diol, preferably based on 3-methyl-1,5-pentanediol (MPD) and sebacic acid, with at least one diisocyanate **DI** and one (meth)acrylic ester having a hydroxyl group,
wherein
- The diol **DO2** reacts with a diisocyanate **DI,** preferably isophorone diisocyanate (IPDI) or methylene diphenyl diisocyanate (MDI), which is present in stochiometric excess.
- And the resulting isocyanate-terminated polyurethane is reacted with the (meth)acrylic ester having a hydroxyl group, in particular with a hydroxyalkyl (meth)acrylate, preferably with hydroxyethyl acrylate (HEA) or hydroxyethyl methacrylate (HEMA), to afford the elastomer **E2** of formula (III).

5. The two-component composition according to any claims 1 to 4, wherein the mass ratio of **E1** to **E2** ranges from 40:1 to 1:3, preferably from 5:1 to 1:2, most preferably from 2:1 to 1:1.

6. The two-component composition according to any claims 1 to 5, **characterized in that** the composition in component **C1** additionally contains 5 to 40 wt.-%, preferably 10 to 30 wt.-%, based on the total weight of **C1,** of at least one filler **F,** particularly a calcium carbonate, preferably a coated calcium carbonate.

7. The two-component composition according to any claims 1 to 6, **characterized in that** the composition in component **C1** additionally contains 0.1 to 2.5 wt.-%, preferably 0.5 to 2 wt.-%, based on the total weight of **C1,** of at least one activator for free radical curing **A,** wherein the activator **A** preferably is N,N-bis(2-hydroxyethyl)-para-toluidine.

8. The two-component composition according to any claims 1 to 7, **characterized in that** the composition in component **C1** additionally contains between 0.1 to 30 wt.-%, preferably between 5 to 20 wt.-%, based on the total weight of **C1,** of at least one core-shell polymer **CSP,** preferably the **CSP** is a methacrylate butadiene styrene (MBS) polymer.

9. The two-component composition according to any claims 1 to 8, **characterized in that** component **C1** additionally contains between 0.001 to 0.5% wt.-%, based on the total weight of component **C1,** of at least one inhibitor for free-radical curing, in particular an alkylated phenol, preferably 2,6-di-tert-butyl-p-cresol.

10. The two-component composition according to any claims 1 to 9, **characterized in that** the component **C2** contains 5 to 75 wt.-%, based on the total weight of **C2,** of the at least one initiator for free-radical curing, in particular a thermally activatable free-radical former, preferably a peroxide, a hydroperoxide or a perester, most preferably dibenzoyl peroxide (DBPO), or a photoinitiator, in particular a photoinitiator which forms free-radicals upon irradiation with electromagnetic radiation having a wavelength of 230 nm to 400 nm.

11. The two-component composition according to any claims 1 to 10, **characterized in that** the component **C1** contains 10 to 60 wt.-%, preferably of 15 to 55 wt.-%, most preferably of 20 to 50 wt.-%, based on the total weight of the composition, of bio-based or bio-based derived contents.

12. The use of the two-component composition according to any claims 1 to 11 as an adhesive or sealant or for producing coatings.

13. The use according to claim 12 for bonding materials having different linear coefficients of thermal expansion, in particular for bonding glass or ceramic substrates with plastics and/or metals, preferably for bonding glass with polyvinyl chloride (PVC) and/or aluminum, wherein the linear coefficients of thermal expansion of the substrates to be bonded preferably have a ratio to one another of ≥ 2:1.

14. A process for bonding substrates **S1** and **S2** comprising the steps of
i) applying a composition as claimed in any of claims 1 to 11 to a substrate **S1;**
ii) contacting the applied composition with a second substrate **S2** within the open assembly time;
or
i') applying a composition as claimed in any of claims 1 to 11 to a substrate **S1;**
ii') applying a composition as claimed in any of claims 1 to 11 to a substrate **S2;**
iii') joining the two substrates **S1** and **S2** to which composition has been applied within the open assembly time;
wherein the second substrate **S2** is composed of a material identical or different to that of substrate **S1;**
and wherein steps i) or i') and ii') are preceded by a step I) of partial or complete mixing of the two components **C1** and **C2.**

15. An article bonded by a process as claimed in claim 14, wherein this article is preferably a building or an above- or below-ground built structure, an industrially manufactured product or a consumer good, in particular a window, a domestic appliance, a tool or a means of transport, in particular a vehicle, or an attachable component of a vehicle, preferably a window or a door, such as are employed in built structures.

16. The radically curable composition according to claims 1 to 11, **characterized in that** said composition comprises in a first component **C1**
- 20 - 50 wt.-% of monomer **M;**
- 5 - 40 wt.-% of elastomer **E1;**
- 1 - 40 wt.-% of elastomer **E2;**
- 5 - 40 wt.-% of filler **F;**
- 0.1 - 2.5 wt.-% of activator **A;**
- 1 - 30 wt.-% of core-shell particles **CSP;**
- 0.5 - 5 wt.-% of adhesion promoter;
- 0.001 - 0.5 wt.-% of inhibitor.
Based on the total weight of component **C1**
and in a second component **C2**
- 5 - 75 wt.-% of initiator **I;**
- 10 - 80 wt.-% of filler **F;**
- 10 - 60 wt.-% of plasticizer **P;**
Based on the total weight of component **C2.**
